# EUROPÄISCHE PATENTSCHRIFT

(11) **EP 3 818 091 B1**
(45) Veröffentlichungstag und Bekanntmachung des Hinweises auf die Patenterteilung: **31.12.2025**
(21) Anmeldenummer: 19733806.4
(22) Anmeldetag: 01.07.2019
(51) Int. Cl.: C08G 18/75, C08G 18/48, C08G 18/08, C08G 18/12, C08G 18/32, C08G 18/40, C08G 18/42

(54) **VERFAHREN UND VORRICHTUNG ZUR HERSTELLUNG EINER POLYURETHAN-DISPERSION MIT VERRINGERTER SCHAUMBILDUNG**
METHOD AND DEVICE FOR PRODUCING A POLYURETHANE DISPERSION WITH REDUCED FOAMING
PROCÉDÉ ET DISPOSITIF DE PRODUCTION D'UNE DISPERSION DE POLYURÉTHANE À MOUSSAGE RÉDUIT

(30) Priorität: 03.07.2018 EP 18181433
(43) Veröffentlichungstag der Anmeldung: 12.05.2021
(73) Patentinhaber: Covestro Deutschland AG, 51373 Leverkusen (DE)
(72) Erfinder: DÖRR, Sebastian, 40593 Düsseldorf (DE); BRAHM, Martin, 51519 Odenthal (DE); ZASTROW, Alfred, 41542 Dormagen (DE); MICHELE, Volker, 51065 Köln (DE)
(74) Vertreter: Levpat
(86) Internationale Anmeldenummer: PCT/EP2019/067509
(87) Internationale Veröffentlichungsnummer: WO 2020/007756

(56) Entgegenhaltungen:
- DE-A1- 2 708 442
- DE-A1- 2 708 442
- JP-A- H04 372 603
- JP-A- H04 372 603
- US-A1- 2015 005 444
- US-A1- 2015 005 444

## Beschreibung

Die vorliegende Erfindung betrifft ein Verfahren zur Herstellung einer Polyurethan-Dispersion, umfassend die Schritte:
I) Bereitstellen von Polyurethan-Polymeren und/oder Polyurethan-Prepolymeren A) in einer flüssigen Phase umfassend ein erstes Lösungsmittel, welches mit Wasser mischbar ist und welches einen niedrigeren Siedepunkt als Wasser aufweist;
II) Für den Fall, dass in Schritt I) isocyanatfunktionelle Polymere oder isocyanatfunktionelle Prepolymere bereitgestellt wurden: Hinzufügen von NCO-reaktiven Verbindungen so dass wenigstens teilweise eine Reaktion mit den Polymeren oder Prepolymeren eintritt;
III) Abdestillieren des mit Wasser mischbaren ersten Lösungsmittels, so dass eine wässrige Polyurethan-Dispersion erhalten wird;
wobei die flüssige Phase in Schritt I) weiterhin Wasser umfasst und/oder nach Schritt II) Wasser zu der nach Schritt II) erhaltenen Mischung hinzugefügt wird und während des Schritts III) entstehende Schaumblasen wenigstens zeitweise mit einem zweiten Lösungsmittel kontaktiert werden, wobei das Kontaktieren der Schaumblasen mit dem zweiten Lösungsmittel durch Besprühen aus einer oder mehreren Sprühdüsen erfolgt.

Bei der Herstellung lösungsmittelarmer Polyurethan-Dispersionen liegt das Polymer zunächst in Aceton gelöst vor und wird dann in Wasser dispergiert. Anschließend wird das Aceton durch Destillation im Vakuum entfernt. Hierbei entstehen oft große Mengen an Schaum, wodurch die Destillationsgeschwindigkeit deutlich reduziert werden muss. Dieses senkt die Raum-Zeit-Ausbeute der Anlage. Die Zugabe von Entschäumern, deren chemische Basis häufig hydrophobe Mineralöle oder Silikonöle ist, kann die Schaumbildung nur teilweise unterdrücken. Darüber hinaus ist die Anwesenheit von Entschäumern in vielen Produkten unerwünscht. So können in Lacken beispielsweise Verlaufsstörungen durch Entschäumer auftreten.

DE 27 08 442 A1 betrifft ein Verfahren zur Herstellung von modifizierten wässrigen KunststoffDispersionen, wobei man in Polyurethane enthaltenden, nicht sedimentierten, wässrigen KunststoffDispersionen bei Raumtemperatur flüssige organische Diisocyanate, gegebenenfalls bei gleichzeitiger Anwesenheit von die Isocyanatpolyadditionsreaktionen und/oder die Dimerisierung von Isocyanatgruppen und/oder die Carbodiimidisierung von Isocyanatgruppen und/oder die Trimerisierung von Isocyanatgruppen beschleunigenden Katalysatoren, unter Durchmischen bei einer solchen Temperatur einträgt, bei welcher eine sichtbare Schaumbildung unterbleibt, man die genannte Temperaturbedingung nach erfolgter Zugabe des Diisocyanate solange aufrecht erhält, bis mindestens 50 % der Isocyanatgruppen des eingetragenen Diisocyanats abreagiert sind und man gegebenenfalls anschließend die Umsetzung durch Erhitzen auf bis zu 100 °C liegende Temperaturen zu Ende führt.

JP H04 372603 A offenbart die Herstellung von wasserlöslichen oder wasserquellbaren Polymeren. US2015/005444 A1 offenbart ein Polyurethan-Präpolymer welches in Aceton gelöst wird, und mit Carbodihydrazid und Diaminosulphonat verlängert wird. Das erhaltene Polyurethan wird nun durch Zugabe von Wasser dispergiert. Anschließend wird das Aceton unter leichtem Vakuum abdestilliert.

Die vorliegende Erfindung hat sich die Aufgabe gestellt, ein Verfahren bereitzustellen, bei dem während des Abdestillierens von organischen Lösungsmitteln eine geringere Schaumbildung auftritt. Gelöst wird diese Aufgabe durch ein Verfahren gemäß Anspruch 1. Vorteilhafte Weiterbildungen sind in den Unteransprüchen angegeben. Sie können beliebig kombiniert werden, sofern sich aus dem Kontext nicht eindeutig das Gegenteil ergibt.

Ein Verfahren zur Herstellung einer Polyurethan-Dispersion umfasst die Schritte:
I) Bereitstellen von Polyurethan-Polymeren und/oder Polyurethan-Prepolymeren A) in einer flüssigen Phase umfassend ein erstes Lösungsmittel, welches mit Wasser mischbar ist und welches einen niedrigeren Siedepunkt als Wasser aufweist;
II) Für den Fall, dass in Schritt I) isocyanatfunktionelle Polymere oder isocyanatfunktionelle Prepolymere bereitgestellt wurden: Hinzufügen von NCO-reaktiven Verbindungen so dass wenigstens teilweise eine Reaktion mit den Polymeren oder Prepolymeren eintritt;
III) Abdestillieren des mit Wasser mischbaren ersten Lösungsmittels, so dass eine wässrige Polyurethan-Dispersion erhalten wird;
wobei die flüssige Phase in Schritt I) weiterhin Wasser umfasst und/oder nach Schritt II) Wasser zu der nach Schritt II) erhaltenen Mischung hinzugefügt wird.

Während des Schritts III) entstehende Schaumblasen werden wenigstens zeitweise mit einem zweiten Lösungsmittel kontaktiert, wobei das Kontaktieren der Schaumblasen mit dem zweiten Lösungsmittel durch Besprühen aus einer oder mehreren Sprühdüsen erfolgt.

Es wurde überraschenderweise gefunden, dass das während der Destillation in Schritt III) eingebrachte zweite Lösungsmittel die Schaumblasen effektiv zerstört. Ohne auf eine Theorie festgelegt zu sein, wird angenommen, dass lokal eine starke Schwankung der Grenzflächenspannung stattfindet, welche die Schaumlamellen destabilisiert und damit zum Platzen der Blasen führt. Dadurch kann deutlich schneller destilliert werden.

Das Polymer oder Prepolymer A) können eine durchschnittliche NCO-Funktionalität von 0 bis 6, vorzugweise von ≥ 1,8 bis ≤ 3,5 aufweisen. Zu deren Herstellung wird das Polyisocyanat oder die Polyisocyanate im stöchiometrischen Überschuss/Unterschuss eingesetzt, so dass das Polymer oder Prepolymer endständige Isocyanatgruppen oder OH-Gruppen aufweisen.

Besonders geeignete Lösungsmittel für das Prepolymer sind ganz oder teilweise mit Wasser im Temperaturbereich von 10 °C - 120 °C mischbar, sind gegenüber Isocyanatgruppen nicht reaktiv und können optional nach Herstellung der Dispersion destillativ entfernt werden. Es ist weiterhin auch möglich, zusätzlich zu den vorgenannten Lösungsmitteln weitere mit Wasser nicht oder schlecht mischbare Lösungsmittel einzusetzen, die gegenüber Isocyanatgruppen nicht reaktiv sind. Es eignen sich auch Lösemittelgemische aus mehreren Lösungsmitteln, die die vorgenannten Bedingungen erfüllen, zur Herstellung der erfindungsgemäßen Dispersionen.

Bevorzugte Lösungsmittel sind Aceton, Butanon, Tetrahydrofuran, Ethylacetat, Butylacetat und/oder Dimethylcarbonat. Ganz besonders bevorzugt ist Aceton.

In einer Ausführungsform sind die isocyanatfunktionellen Prepolymere A) erhältlich aus der Reaktion von
A1) organischen Polyisocyanaten mit
A2) monomeren Polyolen und/oder polymeren Polyolen mit zahlenmittleren Molekulargewichten von ≥ 400 g/mol bis ≤ 8000 g/mol und OH-Funktionalitäten von ≥ 1,5 bis ≤ 6.

Geeignete Polyisocyanate A1) sind aromatische, araliphatische, aliphatische oder cycloaliphatische Polyisocyanate. Es können auch Mischungen solcher Polyisocyanate eingesetzt werden. Bevorzugte Polyisocyanate sind ausgewählt aus der Gruppe bestehend aus Butylendiisocyanat, Hexamethylendiisocyanat (HDI), 1,5-Pentamethylendiisocyanat, Isophorondiisocyanat (IPDI), 2,2,4 und/oder 2,4,4-Trimethylhexamethylendiisocyanat, die isomeren Bis(4,4'-isocyanatocyclohexyl)-methane oder deren Mischungen beliebigen Isomerengehalts, Isocyanatomethyl-1,8-octandiisocyanat, 1,4-Cyclohexylendiisocyanat, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, Triphenylmethan-4,4',4"-triisocyanat und deren Derivate mit Urethan-, Isocyanurat-, Allophanat-, Biuret-, Uretdion-, Iminooxadiazindionstruktur. Weiterhin bevorzugt sind Mischungen derselben. Besonders bevorzugt sind Hexamethylendiisocyanat, Isophorondiisocyanat, Pentamethylendiisocyanat und die isomeren Bis(4,4'-isocyanatocyclohexyl)methane sowie deren Mischungen.

Geeignete monomere Polyole A2) sind beispielsweise sind kurzkettige, d.h. 2 bis 20 Kohlenstoffatome enthaltende aliphatische, araliphatische oder cycloaliphatische Polyole. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethyl-pentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester). Bevorzugt sind 1,4-Butandiol, 1,4-Cyclohexandimethanol und 1,6-Hexandiol. Beispiele geeigneter Triole sind Trimethylolethan, Trimethylolpropan oder Glycerin, bevorzugt ist Trimethylolpropan.

Bei den polymeren Polyolen A2) handelt es sich um Verbindungen, die ihrerseits aus Monomeren aufgebaut sind und die neben den meist terminalen Isocyanat-reaktiven Endgruppen weitere funktionelle Gruppen entlang der Hauptkette aufweisen.

Geeignete höhermolekulare Polyole sind Polyesterpolyole, Polyacrylatpolyole, Polyurethanpolyole, Polycarbonatpolyole, Polyetherpolyole, Polyesterpolyacrylatpolyole, Polyurethanpolyacrylatpolyole, Polyurethanpolyesterpolyole, Polyurethanpolyetherpolyole, Polyurethanpolycarbonatpolyole und Polyesterpolycarbonatpolyole, Polyetherpolyamine und Polyamidopolyamine besonders bevorzugt sind Polyesterpolyole, Polyetherpolyole und Polycarbonatpolyole, besonders bevorzugt sind Polyesterpolyole.

Die geeigneten Polyesterpolyole sind häufig aus einer oder mehreren aliphatischen und/oder aromatischen und/oder araliphatischen Dicarbonsäuren mit ein oder mehreren aliphatischen und/oder aromatischen und/oder araliphatischen Diolen aufgebaut und werden über einen Polykondensationsprozess hergestellt.

Gut geeignete Polyesterpolyole sind die bekannten Polykondensate aus Di- sowie gegebenenfalls Tri,- und Tetraolen und Di- sowie gegebenenfalls Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopenthylglykolester, wobei die drei letztgenannten Verbindungen bevorzugt sind. Um eine Funktionalität ≥ 2 zu erzielen, können gegebenenfalls Polyole mit einer Funktionalität von 3 anteilig verwendet werden, beispielsweise sind Trimethylolpropan, Glycerin, Erythrit, Pentaerythrit, Triemthylolbenzol oder Trishydroxyethylisocyanurat zu nennen.

Als Dicarbonsäuren sind Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, Bernsteinsäure, 3,3-Diethylglutarsäure, 2,2-Dimethylbernsteinsäure bevorzugt. Anhydride dieser Säuren sind ebenfalls brauchbar, soweit sie existieren. Für die Belange der vorliegenden Erfindung werden die Anhydride infolgedessen durch den Ausdruck "Säure" umfasst. Bevorzugt werden auch Monocarbonsäuren, wie Benzoesäure und Hexancarbonsäure verwendet, vorausgesetzt, dass die mittlere Funktionalität des Polyols ≥2 ist. Gesättigte aliphatische oder aromatische Säuren sind bevorzugt, wie Adipinsäure oder Isophthalsäure. Als gegebenenfalls in kleineren Mengen mitzuverwendende Polycarbonsäure sei hier Trimellitsäure genannt.

Hydroxycarbonsäuren, die als Reaktionsteilnehmer bei der Herstellung eines Polyesterpolyols mit endständigen Hydroxylgruppen geeignet sind, sind beispielsweise Hydroxycapronsäure, Hydroxybuttersäure, Hydroxydecansäure, Hydroxystearinsäure und dergleichen. Brauchbare Lactone sind u.a. ε-Caprolacton, Butyrolacton und Homologe.

Bevorzugt sind Polyesterpolyole auf Basis von Butandiol und/oder Neopentylglykol und/oder Hexandiol und/oder Ethylenglykol und/oder Diethylenglykol mit Adipinsäure und/oder Phthalsäure und/oder Isophthalsäure. Besonders bevorzugt sind Polyesterpolyole auf Basis von Butandiol und/oder Neopentylglykol und/oder Hexandiol mit Adipinsäure und/oder Phthalsäure.

Als Polyetherpolyole seien z.B. die Polyadditionsprodukte der Styroloxide, des Ethylenoxid, Propylenoxid, Tetrahydrofuran, Butylenoxid, Epichlorhydrins, sowie ihre Mischadditions- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole genannt.

Geeignete hydroxyfunktionelle Polyether weisen OH-Funktionalitäten von 1,5 bis 6,0, bevorzugt 1,8 bis 3,0, OH-Zahlen von 50 bis 700, bevorzugt von 100 bis 600 mg KOH/g Feststoff und Molekulargewichte Mn von 106 bis 4 000 g/mol, bevorzugt von 200 bis 3500 auf, wie z.B. Alkoxylierungsprodukte hydroxyfunktioneller Startermolekuele wie Ethylenglykol, Propylenglykol, Butandiol, Hexandiol, Trimethylolpropan, Glycerin, Pentaerythrit, Sorbit oder Gemische dieser und auch anderer hydroxyfunktioneller Verbindungen mit Propylenoxid oder Butylenoxid. Bevorzugt sind Polypropylenoxidpolyole und Polytetramethylenoxidpolyole mit einem Molekulargewicht von 300 bis 4000 g/mol. Hierbei können die besonders niedermolekularen Polyetherpolyole bei entsprechend hohen OH-Gehalten wasserlöslich sein. Besonders bevorzugt sind jedoch wasserunlösliche Polypropylenoxidpolyole und Polytetramethylenoxidpolyole mit einem Molgewicht von 500 - 3000 g/mol sowie deren Mischungen.

Die in Frage kommenden Polycarbonatpolyole sind durch Reaktion von Kohlensäurederivaten, z.B. Diphenylcarbonat, Dimethylcarbonat oder Phosgen mit Diolen erhältlich. Als derartige Diole kommen z.B. Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutlyenglykol, Polybutylenglykole, Bisphenol A, Tetrabrombisphenol A, aber auch Lacton modifizierte Diole in Frage. Bevorzugt enthält die Diolkomponente 40 bis 100 Gew.-% 1,6-Hexandiol und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol ε-Caprolacton oder durch Veretherung von Hexandiol mit sich selbst zum Di- oder Trihexylenglykol erhalten werden. Auch Polyether-Polycarbonatpolyole können eingesetzt werden.

Bevorzugt sind Polycarbonatpolyole auf Basis von Dimethylcarbonat und Hexandiol und/oder Butandiol und/oder ε-Caprolacton. Ganz besonders bevorzugt sind Polycarbonatpolyole auf Basis von Dimethylcarbonat und Hexandiol und/oder ε-Caprolacton.

Es ist ferner möglich, dass in der Synthese der Prepolymere bereits isocyanatreaktive kationische, potentiell kationische, anionische oder potentiell anionische und/oder nichtionische Hydrophilierungsmittel A4) hinzugefügt werden. Details zu den Hydrophilierungsmitteln A4) werden weiter unten im Text gegeben.

In einer weiteren bevorzugten Ausführungsform werden in Schritt II) isocyanatreaktive Verbindungen A3) mit Molekulargewichten von 62 bis 399 g/mol hinzugefügt. Der Kettenverlängerungsgrad, also das Äquivalentverhältnis von NCO-reaktiven Gruppen der zur Kettenverlängerung und Kettenterminierung eingesetzten Verbindungen zu freien NCO-Gruppen des Prepolymers, liegt im allgemeinen zwischen 40 und 150 %, bevorzugt zwischen 50 und 110 %, besonders bevorzugt zwischen 60 und 100 %.

Zur Kettenverlängerung der Prepolymere mit Verbindungen A3) können beispielsweise Amine verwendet werden, die keine ionischen bzw. ionogenen, wie anionisch hydrophilierenden Gruppen aufweisen. Als Komponente A3) werden bevorzugt organische Di- oder Polyamine wie beispielsweise 1,2-Ethylendiamin, 1,2- und 1,3-Diaminopropan, 1,4-Diaminobutan, 1,6-Diaminohexan, Isophorondiamin, Isomerengemisch von 2,2,4- und 2,4,4-Trimethylhexamethylendiamin, 2-Methylpentamethylendiamin, Diethylentriamin, 4,4-Diaminodicyclohexylmethan, Hydrazinhydrat, und/oder Dimethylethylendiamin eingesetzt.

Darüber hinaus können als Komponente A3) auch Verbindungen, die neben einer primären Aminogruppe auch sekundäre Aminogruppen oder neben einer Aminogruppe (primär oder sekundär) auch OH-Gruppen aufweisen, eingesetzt werden. Beispiele hierfür sind primäre/sekundäre Amine, wie Diethanolamin, 3-Amino-1-methylaminopropan, 3-Amino-1-ethylaminopropan, 3-Amino-1-cyclohexyl-aminopropan, 3-Amino-1-methylaminobutan, Alkanolamine wie N-Aminoethylethanolamin, Ethanolamin, 3-Aminopropanol, Neopentanolamin.

Ferner können als Komponente A3) auch monofunktionelle isocyanatreaktive Aminverbindungen eingesetzt werden, wie beispielsweise Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, bzw. geeignete substituierte Derivate davon, Amidamine aus diprimären Aminen und Monocarbonsäuren, Mono-ketim von diprimären Aminen, primär/tertiäre Amine, wie N,N-Dimethylaminopropylamin.

Als Komponente A3) eignen sich auch Dihydrazide wie beispielsweise Adipinsäuredihydrazid, Oxalsäuredihydrazid, Carbohydrazid, und Bernstein-säuredihydrazid. Ebenfalls kommen längerkettige, aminofunktionelle Verbindungen wie Polyetheramine ("Jeffamine") als Komponente A3) in Frage.

Bevorzugt werden als Komponente A3) 1,2-Ethylendiamin, Bis(4-aminocyclohexyl)methan, 1,4-Diaminobutan, Isophorondiamin, Ethanolamin, Diethanolamin und Diethylentriamin eingesetzt.

Zur Kettenverlängerung der Prepolymere mit Verbindungen A3) können weiterhin beispielsweise niedermolekulare Polyole verwendet werden. Geeignete niedermolekulare Polyole sind kurzkettige, d.h. 2 bis 20 Kohlenstoffatome enthaltende aliphatische, araliphatische oder cycloaliphatische Verbindungen. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethyl-pentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester). Bevorzugt sind 1,4-Butandiol, 1,4-Cyclohexandimethanol und 1,6-Hexandiol. Beispiele geeigneter Triole sind Trimethylolethan, Trimethylolpropan oder Glycerin, bevorzugt ist Trimethylolpropan.

Weitere Beispiele für Kettenverlängerer A3) sind Dihydrazide wie Oxalsäuredihydrazid, Carbohydrazid und Adipinsäuredihydrazid, besonders bevorzugt sind Carbohydrazid und Adipinsäuredihydrazid. Beispiele für geeignete Dithiole sind 1,2-Ethandithiol, 1,3-Propandithiol, 1,4-Butandithiol und 1,6-Hexandithiol. Besonders bevorzugt sind 1,2-Ethandithiol und 1,6-Hexandithiol.

Als niedermolekulare Verbindungen A3) werden bevorzugt Diole verwendet.

In einer weiteren Ausführungsform werden Schritt II) isocyanatreaktive kationische, potentiell kationische, anionische oder potentiell anionische und/oder nichtionische Hydrophilierungsmittel A4) hinzugefügt. Der Kettenverlängerungsgrad, also das Äquivalentverhältnis von NCO-reaktiven Gruppen der zur Kettenverlängerung und Kettenterminierung eingesetzten Verbindungen zu freien NCO-Gruppen des Prepolymers, liegt im allgemeinen zwischen 40 und 150 %, bevorzugt zwischen 50 und 110 %, besonders bevorzugt zwischen 60 und 100 %.

Dispergierend wirkende Verbindungen (Hydrophilierungsmittel) A4) sind solche, die beispielsweise Sulfonium-, Ammonium-, Phosphonium-, Carboxylat-, Sulfonat-, Phosphonat-Gruppen enthalten oder die Gruppen, die durch Salzbildung in die vorgenannten Gruppen überführt werden können (potentiell ionische Gruppen), oder Polyethergruppen enthalten und durch vorhandene isocyanatreaktive Gruppen in die Makromoleküle eingebaut werden können. Die zur Salzbildung notwendigen Neutralisationsmittel können im Verhältnis zur salzbildenden Gruppe entweder stöchiometrisch oder im Unterschuss hinzu gegeben werden. Zur Erzeugung von anionischen Gruppen werden organische Basen, wie tertiäre Amine, oder anorganische Basen, wie Alkalimetallhydroxide oder Ammoniak hinzu gegeben. Bevorzugt werden dabei tertiäre Amine wie das Triethylamin, Triethanolamin oder Dimethylethanolamin eingesetzt. Bevorzugte geeignete isocyanatreaktive Gruppen sind Hydroxyl- und Aminogruppen.

Geeignete ionische oder potentiell ionische Verbindungen sind z.B. Mono- und Dihydroxycarbonsäuren, Dihydrohxydicarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure, N-(2-Aminoethyl)alanin, 2-(2-Amino-ethylamino)ethansulfonsäure, Ethylendiaminpropyl- oder butylsulfonsäure, 1,2- oder 1,3-Propylendiaminethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von **IPDI** und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III) sowie in kationische Gruppen überführbare Bausteine wie N-Methyl-diethanolamin als hydrophile Aufbaukomponenten. Weiterhin kann das Salz der Cyclohexylaminopropansulfonsäure (CAPS) aus WO-A 01/88006 als anionisches Hydrophilierungsmittel verwendet werden. Bevorzugte ionische oder potentielle ionische Verbindungen sind solche, die über Carboxy- oder Carboxylat- und/oder Sulfonatgruppen und/oder Ammoniumgruppen verfügen.

Bevorzugte Verbindungen sind Polyethersulfonat, Dimethlyolpropionsäure, Weinsäure und Dimethylolbuttersäure, besonders bevorzugt sind Polyethersulfonat und Dimethylolpropionsäure. Geeignete nichtionisch hydrophilierend wirkende Verbindungen sind z.B. Polyoxyalkylenether, die mindestens eine Hydroxy- oder Aminogruppe enthalten. Diese Polyether enthalten einen Anteil von 30 Gew.-% bis 100 Gew.-% an Bausteinen, die vom Ethylenoxid abgeleitet sind. In Frage kommen linear aufgebaute Polyether einer Funktionalität zwischen 1 und 3, aber auch Verbindungen der allgemeinen Formel: 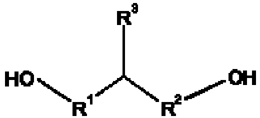 in welcher R1 und R2 unabhängig voneinander jeweils einen zweiwertigen aliphatischen, cycloaliphatischen oder aromatischen Rest mit 1 bis 18 C-Atomen, die durch Sauerstoff und/oder Stickstoffatome unterbrochen sein können, bedeuten und R3 für einen alkoxyterminierten Polyethylenoxidrest steht.

Nichtionisch hydrophilierend wirkende Verbindungen sind beispielsweise auch einwertige, im statistischen Mittel 5 bis 70, bevorzugt 7 bis 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind.

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3 Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anis¬alkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-% bevorzugt zu mindestens 40 mol-% aus Ethylenoxideinheiten bestehen. Bevorzugte nichtionische Verbindungen sind monofunktionelle gemischte Polyalkylenoxidpolyether, die mindestens 40 mol-% Ethylenoxid- und maximal 60 mol-% Propylenoxideinheiten aufweisen.

Besonders bevorzugt werden monohydroxyfunktionelle Alkoxypolyethylenglykole wie z.B. MPEG 750 (Dow Chemical) und LB 25 (Covestro) und dihydroxyfunktionelle Verbindungen mit lateralen Polyethylenoxid-Einheiten wie z.B. Ymer N 120 (Perstorp) oder Tegomer D 3404.

Ein besonders bevorzugtes Präpolymer wird aus einem Polyester, der aus Adipinsäure, 1,6-Hexandiol und Neopentylglykol aufgebaut ist, und Hexamethylendiisocyanat hergestellt. Der Polyester hat bevorzugt eine Molmasse von 1700 g/mol.

Ein besonders bevorzugtes Kettenverlängerungsreagenz ist 2-(2-Aminoethylamino)-ethansulfonsäure.

Das molare Verhältnis für die Herstellung des Prepolymeren A) von NCO- zu isocyanatreaktiven-Gruppen kann dabei von 1,05 - 4,00 variieren, bevorzugt von 1,2 - 3,0, besonders bevorzugt von 1,4 - 2,5. Die Herstellung der Präpolymere erfolgt, indem das entsprechende Polyol oder eine Mischung verschiedener Polyole in einem Reaktionsgefäß vorgelegt wird und anschließend das Polyisocyanat oder die Mischung von Polyisocyanaten bei erhöhter Temperatur zugegeben wird. Wenn Mischungen von Polyolen und/oder Polyisocyanaten verwendet werden, dann können die einzelnen Reaktionspartner auch zu unterschiedlichen Zeitpunkten hinzu gegeben werden, um einen gezielten Aufbau des Präpolymeren zu erreichen. Dabei kann die Reaktion entweder in der Schmelze erfolgen oder auch in geeigneten, inerten Lösungsmitteln wie z.B. Aceton oder Butanon. Die Reaktionstemperatur liegt dabei zwischen 50 °C und 130 °C und die Reaktionsdauer beträgt 1 h - 24 h. Die Urethanisierungsreaktion kann durch Verwendung von geeigneten Katalysatoren beschleunigt werden. Dazu eignen sich die dem Fachmann bekannten Katalysatoren wie z. B. Triethylamin, 1,4-Diazabicyclo-[2,2,2]-octan, Zinndioktoat, Dibutylzinndilaurat oder Wismutdioktoat, die mit vorgelegt oder später zudosiert werden. Bevorzugt ist Dibutylzinndilaurat. Die Reaktion ist üblicherweise dann beendet, wenn sich der NCO-Gehalt nicht mehr ändert, eine Reaktionskontrolle erfolgt dabei üblicherweise durch Titration. Um die weitere Verarbeitung des Präpolymeren zu gewährleisten, sind generell niedrig viskose Präpolymere von Vorteil, dazu wird, falls nicht während der Herstellung geschehen, das Präpolymer in einem geeigneten Lösungsmittel gelöst. Als niedrig viskose Präpolymere oder der Präpolymer- Lösungen werden solche Systeme bezeichnet deren Viskosität bei einer Scherrate von 40 s⁻¹ < 10⁴ mPas liegt. Die Präpolymerlösung hat dabei bevorzugt einen Feststoffanteil von > 40% und als Lösungsmittel wird Aceton bevorzugt.

Eine bevorzugte nach dem erfindungsgemäßen Verfahren herzustellende Polyurethandispersion enthält 9 bis 60 Gew.-% einer Polyisocyanatverbindung, 35 bis 90 Gew.-% eines isocyanatreaktivem Polyols mit einer Molmasse > 500 g/mol, 0,5 bis 5 Gew.- % eines ionischen oder potentiell ionischen Hydrophilierungsmittels, 0 bis 10 Gewichts-% niedermolekulare (C₂ bis Cs) Alkohole und 0,5 bis 10 Gew.-% eines Kettenverlängerungsamins, welches keine hydrophilen Gruppen aufweist.

In einer besonders bevorzugten Ausführungsform enthält die Polyurethandispersion wenigstens einen Zusatz ausgewählt aus der Gruppe bestehend aus 0,1 bis 25,0 Gew.-% eines nicht-ionischen Hydrophilierungsmittels, 0,1 bis 15,0 Gew.-% eines weiteren Polyols mit einer Molmasse < 500 g/mol und 0,1 bis 3,0 Gew.-% weitere Hilfs- oder Zusatzstoffe, insbesondere Emulgatoren, Biozide, Alterungsschutzmittel.

In einer weiteren bevorzugten Ausführungsform wird das Verfahren derart durchgeführt, dass in der erhaltenen Polyurethan-Dispersion Entschäumer in einem Anteil von ≤ 1 Gewichts-%, bezogen auf das Gewicht des Polyurethans, vorliegen. Bevorzugt liegt der Gehalt bei 0 Gewichts-% bis ≤ 0,1 Gewichts-%, mehr bevorzugt bei 0 Gewichts-% bis ≤ 0,01 Gewichts-%. Ganz besonders bevorzugt sind keine Entschäumer in der erhaltenen Dispersion vorhanden, wobei technisch unvermeidliche Verunreinigungen mit in diesem Begriff enthalten sind. Bei den Entschäumern kann es sich beispielsweise um Silikonöle oder Paraffine handeln.

In einer weiteren bevorzugten Ausführungsform ist das zweite Lösungsmittel mit dem ersten Lösungsmittel identisch. So kann beispielsweise abdestilliertes Lösungsmittel kondensiert werden und anschließend als zweites Lösungsmittel Schaumblasen wieder kontaktieren. Diese Vorgehensweise hat weiterhin den Vorteil, dass nicht zu erwarten ist, dass sich Produkteigenschaften ändern, da schließlich kein neuer Stoff in das Produkt eingeführt wird.

In einer weiteren bevorzugten Ausführungsform sind das erste und das zweite Lösungsmittel Aceton.

Das Kontaktieren der Schaumblasen mit dem zweiten Lösungsmittel erfolgt durch Besprühen aus einer oder mehreren Sprühdüsen. Die Sprühdüse oder Sprühdüsen sind vorzugsweise so angeordnet, dass sich eine gleichmäßige Abdeckung des Behälterquerschnitts mit den Sprühtropfen des zweiten Lösungsmittels ergibt.

In einer weiteren bevorzugten Ausführungsform sind die eine oder mehrere Sprühdüsen im Brüdenraum innerhalb eines zur Destillation verwendeten Gefäßes angeordnet.

In einer weiteren bevorzugten Ausführungsform wird beim Abdestillieren in Schritt III) der erhaltene Brüden über wenigstens ein Brüdenrohr abgezogen und das Kontaktieren der Schaumblasen mit dem zweiten Lösungsmittel erfolgt im Brüdenrohr und/oder einem Abstand von ≤ 1 m von dem Brüdenrohr. Auf diese Weise lässt sich die Menge an benötigtem zweiten Lösungsmittel weiter reduzieren. In dieser Ausführungsform ist das Kontaktieren in der Nähe (weniger als einem Meter Abstand) des Brüdenrohres bevorzugt.

Generell werden zur Verdüsung des zweiten Lösungsmittels bevorzugt Einstoffdüsen eingesetzt, die für die Zerstäubung nicht auf die Zugabe eines Zerstäubungsgases angewiesen sind. Der Bohrungsdurchmesser der Düsen ist auf den gewünschten Druckverlust abzustimmen; dabei ist auch die Neigung kleiner Bohrungen zum Verstopfen durch eventuelle Feststoffablagerungen zu berücksichtigen.

Beim Einsatz im Brüdenrohr können handelsübliche Vollkegel- oder Hohlkegeldüsen verwendet werden, die koaxial im Gleich- oder (bevorzugt) im Gegenstrom zum Gasstrom angeordnet sind. Der Sprühwinkel der Düsen ist dabei bevorzugt klein zu wählen (bevorzugt 30° oder geringer), um möglichst wenig Flüssigkeit an die Wand des Brüdenrohrs zu verlieren. Der Bohrungsdurchmesser der Düsen ist so zu wählen, dass sich für den gewünschten Lösungsmittelstrom ein Druckverlust der Düsen zwischen 0,5 und 20 bar, bevorzugt 1 bis 10 bar und besonders bevorzugt 1 bis 3 bar ergibt.

Beim Einsatz im Brüdenraum des Destillationskessels über dem Flüssigkeitsspiegel können bevorzugt handelsübliche Flachstrahldüsen verwendet werden, die so angeordnet werden, dass der Flachstrahl sich horizontal über dem Flüssigkeitsspiegel ausbreitet und so einen großen Bereich des mit Schaum gefüllten Gasraums erfassen kann. Bevorzugt sind dabei Flachstrahldüsen mit großen Sprühwinkeln oberhalb von 90°, besonders bevorzugt oberhalb von 120°. Je nach Geometrie des Destillationsapparates können auch mehrere Düsen im Kopfraum verteilt werden, um eine gleichmäßige Beaufschlagung des Schaums mit Spray zu gewährleisten. Der Bohrungsdurchmesser der Düsen wird vorzugsweise so gewählt, dass sich für den gewünschten Lösungsmittelstrom ein Druckverlust der Düsen zwischen 0,5 und 20 bar, bevorzugt 1 bis 10 bar und besonders bevorzugt 1 bis 3 bar ergibt. Die vertikale Position der Düsen zwischen Flüssigkeitsspiegel und Brüdenrohranschluss wird vorzugsweise so gewählt, dass einerseits nicht zu viel Spray durch Schwerkrafteinfluss an den Flüssigkeitsspiegel verloren geht und andererseits nicht zu viel Spray mit dem Brüdenstrom ausgetragen wird; bevorzugt ist zu Beginn der Destillation eine Position auf halber Höhe zwischen Flüssigkeitsspiegel und Brüdenrohranschluss.

Je nach Produkteigenschaften kann es auch ausreichend sein, beim Einsatz im Brüdenraum des Destillationskessels über dem Flüssigkeitsspiegel nur eine einzelne handelsübliche Flachstrahldüse unmittelbar unterhalb des Brüdenrohrs anzubringen; bezüglich Sprühwinkel, Bohrungsdurchmesser und Druckverlust sowie vertikaler Positionierung der Düse gilt dann das oben gesagte sinngemäß.

Die ideale Tropfengröße kann je nach Dispersionsart unterschiedlich sein und beeinflusst den Kontakt mit dem zu zerstörenden Schaum einerseits und dem Mitriss im Brüdenstrom. Vorzugsweise weisen die Tropfen eine Größe von < 2000 µm und besonders bevorzugt < 200 µm auf. Tröpfchengrößen von < 10 µm sind wegen des stärkeren Abtransports im Brüdenstrom weniger von Vorteil. Die Tropfengröße kann näherungsweise durch die Wahl von Düsenbohrungsdurchmesser und Druckverlust bei der Versprühung beeinflusst werden.

Abhängig von der Temperatur des verdüsten Lösungsmittels kann es bei der Versprühung zu einer Flash-Verdampfung kommen; diese ist in der Regel nicht bevorzugt, weil dabei sehr kleine Tropfen entstehen können, die mit dem Brüdengasstrom mitgerissen werden und nicht zu einer vollständigen Beaufschlagung des mit Schaum gefüllten Raumes mit Spray führen, da sie aufgrund ihrer geringen Trägheit und der niedrigen Sinkgeschwindigkeit sehr schnell vom umgebenden Gas abgebremst werden.

In einer weiteren bevorzugten Ausführungsform wird das zweite Lösungsmittel während des Schritts III) mit einer Rate von ≥ 0,1 Volumen-%/h bis ≤ 20 (vorzugsweise ≤ 5) Volumen-%/h, bezogen auf das Volumen der während des Schritts III) vorliegenden Dispersion, auf die Schaumblasen appliziert.

In einer weiteren bevorzugten Ausführungsform wird das zweite Lösungsmittel in einer Menge von ≤ 100%, bevorzugt ≤ 30% und besonders bevorzugt ≤ 10% der vor Schritt III) vorliegenden Menge des Lösungsmittels eingesetzt.

Während des Schritts III) kann die Menge des applizierten zweiten Lösungsmittels pro Zeiteinheit konstant sein. In einer weiteren bevorzugten Ausführungsform ist jedoch die Menge des während des Schritts III) applizierten zweiten Lösungsmittels zeitlich veränderlich. Vorzugsweise wird die Menge des applizierten Lösungsmittels im zeitlichen Verlauf des Verfahrens verringert. Es ist weiterhin möglich, das zweite Lösungsmittel pulsierend zu applizieren.

Es ist weiterhin bevorzugt, dass das Kontaktieren mit dem zweiten Lösungsmittel nur so lange erfolgt, wie die Schaumblasen auch eine vorbestimmte Schichthöhe erreichen. Dieses kann mit einer Schaumsonde überwacht werden.

In einer weiteren bevorzugten Ausführungsform wird das Kontaktieren der Schaumblasen mit dem zweiten Lösungsmittel ausschließlich in einem Druckbereich von ≥ 80 mPa bis ≤ 500 mPa durchgeführt. Dieses hat Vorteile beim Explosionsschutz der Anlage.

Ebenfalls offenbart ist eine Vorrichtung zur Durchführung des erfindungsgemäßen Verfahrens, umfassend ein Gefäß, an welches ein Vakuum angelegt werden kann und welches zur Aufnahme einer Polyurethandispersion, welche beim Anlegen eines Vakuums Schaumblasen entwickelt, eingerichtet ist. Die Vorrichtung weist weiterhin eine oder mehrere Düsen auf, durch welche ein Lösungsmittel auf die Schaumblasen appliziert werden kann.

Diese Vorrichtung kann eingerichtet sein, um abdestilliertes Lösungsmittel zu kondensieren und erneut auf die Schaumblasen zu applizieren.

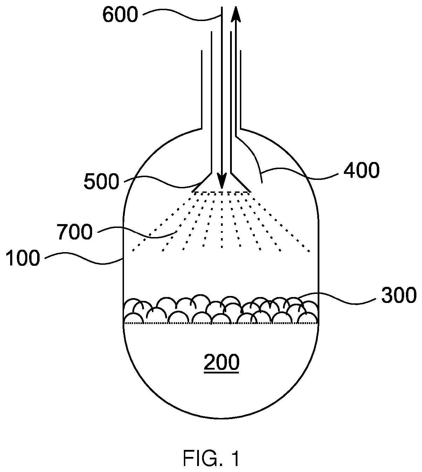

Die vorliegende Erfindung und die offenbarte Vorrichtung werden anhand des nachfolgenden Beispiels und der Figur 1 näher erläutert, ohne jedoch darauf beschränkt zu sein.

FIG. 1 zeigt eine Vorrichtung zur Durchführung des erfindungsgemäßen Verfahrens. Hierbei kann es sich um einen entsprechend modifizierten Destillationskessel handeln. Das Gefäß 100 enthält die wässrige Polyurethandispersion 200, aus welcher das organische Lösungsmittel wie beispielsweise Aceton abdestilliert werden soll. Beim Anlegen eines Vakuums und gegebenenfalls Aufheizen der Dispersion 200 kann gasförmiges Lösungsmittel am Kopf des Behälters 100 abgezogen werden. Dieses ist durch Stoffstrom 400 dargestellt. Weiterhin werden beim Anlegen des Vakuums Schaumblasen 300 gebildet.

Die Vorrichtung weist im Brüdenraum eine Düse 500 auf, aus der ein Strom 600 eines zweiten Lösungsmittels in Form einzelner Strahlen oder Tropfen 700 auf die Schaumblasen 300 appliziert werden kann. Hierdurch platzen die Schaumblasen und es muss nicht befürchtet werden, dass Material der Dispersion 200 über Kopf der Vorrichtung mitgerissen wird.

Der Stoffstrom 400 kann kondensiert werden und dann in Gestalt des Stoffstroms 600 wieder in die Düse 500 eintreten und auf die Schaumblasen 300 appliziert werden.

### Erfindungsgemäßes Beispiel: Herstellung einer Polyurethanharnstoff-Dispersion mit starker Schäumungstendenz

In einem 500 L Reaktor mit Destillationeinheit wurden 56 kg eines Polyesters aus Adipinsäure, Hexandiol und Neopentylglykol mit einem mittleren Molekulargewicht von 1700 g/mol und 5,5 kg eines hydrophilen monofunktionellen Polyethers auf Ethylenoxid-/Propylenoxidbasis (zahlenmittleres Molekulargewicht 2250 g/mol, OH-Zahl 25 mg KOH/g) auf 65 °C aufgeheizt. Anschließend wurden 13,6 kg Isophorondiisocyanat (IPDI) zugegeben und solange bei 120 °C gerührt, bis der theoretische NCO-Wert von 3,0 % unterschritten war.

Das entstandene Prepolymer wurde durch Zusatz von 134 kg Aceton unter Druck gelöst und gleichzeitig auf 40 °C abgekühlt. Im Anschluss wurde eine Lösung aus 3,2 kg Isophorondiamin (IPDA) in 24 kg Wasser bei 40°C zudosiert. Die Nachrührzeit betrug 15 min.

Danach wurde durch Zugabe von 162 kg Wasser innerhalb von 10 Minuten dispergiert. Im direkten Anschluss wurde die Rohdispersion vorsichtig evakuiert. Bei einem Druck von 300 mbar (Temperatur: 34 °C) begann eine intensive Schaumentwicklung, die das Weiterdestillieren unmöglich machte.

Erst durch die erfindungsgemäße Besprühung der Schaumoberfläche im Reaktor mittels Aceton aus einer oberhalb des Flüssigkeitsspiegels befindlichen Flachstrahldüse (Vordruck: 3 bar, Sprühwinkel: 120°, Durchflussmenge kalibriert mit Wasser: 15 kg /h, Tropfengröße: ca. 200 µm) konnte der Schaum augenblicklich niedergeschlagen werden.

Das Abdestillieren des zu diesem Zeitpunkt noch in der Reaktionsmischung befindlichen Acetons konnte hierdurch effizient durch weitere vorsichtige Reduktion des Drucks und leichtes Anheben der Reaktorinnentemperatur weitergeführt werden. Ein versuchsweise kurzzeitiges Beenden der erfindungsgemäßen Acetonbesprühung nach 5 Stunden Destillationszeit führte direkt wieder zu starker Schaumbildung bis weit in das Brüdenrohr.

Daher wurde die erfindungsgemäße Besprühung mit Aceton wieder zugeschaltet, wodurch erneut die Schaumbildung zurückgedrängt werden konnte. Auch beim Absenken des Acetonvordrucks der Düse auf 1,8 bar blieb die Schaumzerstörung effektiv. 30 Minuten vor Beendigung der Destillation wurde die Besprühung mit Aceton abgebrochen. Bei einem Druck von 150 mbar und einer Reaktorinnentemperatur von 49 °C wurde die Destillation beendet. Die Gesamtdauer der Destillation belief sich auf 7 Stunden.

Es wurde eine stabile Dispersion erhalten, der Restaceton-Gehalt der Dispersion lag bei 0,8 Gew.-%.

## Patentansprüche

1. Verfahren zur Herstellung einer Polyurethan-Dispersion, umfassend die Schritte:
I) Bereitstellen von Polyurethan-Polymeren und/oder Polyurethan-Prepolymeren A) in einer flüssigen Phase umfassend ein erstes Lösungsmittel, welches mit Wasser mischbar ist und welches einen niedrigeren Siedepunkt als Wasser aufweist;
II) Für den Fall, dass in Schritt I) isocyanatfunktionelle Polymere oder isocyanatfunktionelle Prepolymere bereitgestellt wurden: Hinzufügen von NCO-reaktiven Verbindungen so dass wenigstens teilweise eine Reaktion mit den Polymeren oder Prepolymeren eintritt;
III) Abdestillieren des mit Wasser mischbaren ersten Lösungsmittels, so dass eine wässrige Polyurethan-Dispersion erhalten wird;
wobei die flüssige Phase in Schritt I) weiterhin Wasser umfasst und/oder nach Schritt II) Wasser zu der nach Schritt II) erhaltenen Mischung hinzugefügt wird,
**dadurch gekennzeichnet, dass**
während des Schritts III) entstehende Schaumblasen wenigstens zeitweise mit einem zweiten Lösungsmittel kontaktiert werden, wobei das Kontaktieren der Schaumblasen mit dem zweiten Lösungsmittel durch Besprühen aus einer oder mehreren Sprühdüsen erfolgt.

2. Verfahren gemäß Anspruch 1, **dadurch gekennzeichnet, dass** die isocyanatfunktionellen Prepolymere A) erhältlich sind aus der Reaktion von
A1) organischen Polyisocyanaten mit
A2) monomeren Polyolen und/oder polymeren Polyolen mit zahlenmittleren Molekulargewichten von ≥ 400 g/mol bis ≤ 8000 g/mol und OH-Funktionalitäten von ≥ 1,5 bis ≤ 6.

3. Verfahren gemäß Anspruch 1 oder 2, **dadurch gekennzeichnet, dass** in Schritt II) isocyanatreaktive Verbindungen A3) mit Molekulargewichten von 62 bis 399 g/mol hinzugefügt werden.

4. Verfahren gemäß einem der Ansprüche 1 bis 3, **dadurch gekennzeichnet, dass** in Schritt II) isocyanatreaktive kationische, potentiell kationische, anionische oder potentiell anionische und/oder nichtionische Hydrophilierungsmittel A4) hinzugefügt werden.

5. Verfahren gemäß einem der Ansprüche 1 bis 4, **dadurch gekennzeichnet, dass** das Verfahren derart durchgeführt wird, dass in der erhaltenen Polyurethan-Dispersion Entschäumer in einem Anteil von ≤ 1 Gewichts-%, bezogen auf das Gewicht des Polyurethans, vorliegen.

6. Verfahren gemäß einem der Ansprüche 1 bis 5, **dadurch gekennzeichnet, dass** das zweite Lösungsmittel mit dem ersten Lösungsmittel identisch ist.

7. Verfahren gemäß einem der Ansprüche 1 bis 6, **dadurch gekennzeichnet, dass** das erste und das zweite Lösungsmittel Aceton sind.

8. Verfahren gemäß Anspruch 7, **dadurch gekennzeichnet, dass** die eine oder mehrere Sprühdüsen im Brüdenraum innerhalb eines zur Destillation verwendeten Gefäßes angeordnet sind.

9. Verfahren gemäß einem der Ansprüche 1 bis 8, **dadurch gekennzeichnet, dass** beim Abdestillieren in Schritt III) der erhaltene Brüden über wenigstens ein Brüdenrohr abgezogen wird und das Kontaktieren der Schaumblasen mit dem zweiten Lösungsmittel im Brüdenrohr und/oder einem Abstand von ≤ 1 m von dem Brüdenrohr erfolgt.

10. Verfahren gemäß einem der Ansprüche 1 bis 9, **dadurch gekennzeichnet, dass** das zweite Lösungsmittel während des Schritts III) mit einer Rate von ≥ 0,1 Volumen-%/h bis ≤ 20 (vorzugsweise ≤ 5) Volumen-%/h, bezogen auf das Volumen der während des Schritts III) vorliegenden Dispersion, auf die Schaumblasen appliziert wird.

11. Verfahren gemäß einem der Ansprüche 1 bis 10, **dadurch gekennzeichnet, dass** das Kontaktieren der Schaumblasen mit dem zweiten Lösungsmittel ausschließlich in einem Druckbereich von ≥ 80 mPa bis ≤ 500 mPa durchgeführt wird.

12. Verfahren gemäß einem der Ansprüche 1 bis 11, **dadurch gekennzeichnet, dass** die Menge des während des Schritts III) applizierten zweiten Lösungsmittels zeitlich veränderlich ist.

## Claims

1. Process for producing a polyurethane dispersion, comprising the steps of:
I) providing polyurethane polymers and/or polyurethane prepolymers A) in a liquid phase comprising a first solvent which is miscible with water and has a lower boiling point than water;
II) if isocyanate-functional polymers or isocyanate-functional prepolymers have been provided in step I): adding NCO-reactive compounds, such that at least partial reaction with the polymers or prepolymers occurs;
III) distilling off the water-miscible first solvent, such that an aqueous polyurethane dispersion is obtained;
wherein the liquid phase in step I) still comprises water and/or, after step II), water is added to the mixture obtained after step II),
**characterized in that**
foam bubbles formed during step III) are at least temporarily contacted with a second solvent, wherein the foam bubbles are contacted with the second solvent by spraying from one or more spray nozzles.

2. Process according to Claim 1, **characterized in that** the isocyanate-functional prepolymers A) are obtainable from the reaction of
A1) organic polyisocyanates with
A2) monomeric polyols and/or polymeric polyols having number-average molecular weights of ≥ 400 g/mol to ≤ 8000 g/mol and OH functionalities of ≥ 1.5 to ≤ 6.

3. Process according to Claim 1 or 2, **characterized in that** isocyanate-reactive compounds A3) having molecular weights of 62 to 399 g/mol are added in step II).

4. Process according to any of Claims 1 to 3, **characterized in that** isocyanate-reactive cationic, potentially cationic, anionic or potentially anionic and/or nonionic hydrophilizing agents A4) are added in step II).

5. Process according to any of Claims 1 to 4, **characterized in that** the process is performed in such a way that defoamers are present in the resultant polyurethane dispersion in a proportion of ≤ 1% by weight, based on the weight of the polyurethane.

6. Process according to any of Claims 1 to 5, **characterized in that** the second solvent is identical to the first solvent.

7. Process according to any of Claims 1 to 6, **characterized in that** the first and second solvents are acetone.

8. Process according to Claim 7, **characterized in that** the one or more spray nozzles are disposed in the vapor space within a vessel used for distillation.

9. Process according to any of Claims 1 to 8, **characterized in that**, in the distillative removal in step III), the vapor obtained is drawn off via at least one vapor tube and the foam bubbles are contacted with the second solvent in the vapor tube and/or at a distance of ≤ 1 m from the vapor tube.

10. Process according to any of Claims 1 to 9, **characterized in that** the second solvent is applied to the foam bubbles during step III) at a rate of ≥ 0.1% by volume/h to ≤ 20% (preferably ≤ 5%) by volume/h, based on the volume of the dispersion present during step III).

11. Process according to any of Claims 1 to 10, **characterized in that** the contacting of the foam bubbles with the second solvent is performed exclusively within a pressure range from ≥ 80 mPa to ≤ 500 mPa.

12. Process according to any of Claims 1 to 11, **characterized in that** the amount of the second solvent applied during step III) is variable over time.

## Revendications

1. Procédé de préparation d'une dispersion de polyuréthane, comprenant les étapes
I) mise à disposition de polymères de polyuréthane et/ou de prépolymères de polyuréthane A) dans une phase liquide comprenant un premier solvant qui est miscible à l'eau et qui présente un point d'ébullition inférieur à celui de l'eau ;
II) pour le cas où, dans l'étape I), des polymères à fonctionnalité isocyanate ou des prépolymères à fonctionnalité isocyanate ont été mis à disposition : ajout de composés réactifs vis-à-vis de NCO de telle sorte qu'une réaction avec les polymères ou les prépolymères se produit au moins partiellement ;
III) élimination par distillation du premier solvant miscible à l'eau, de telle sorte qu'une dispersion aqueuse de polyuréthane est obtenue ;
la phase liquide dans l'étape I) comprenant en outre de l'eau et/ou de l'eau étant ajoutée après l'étape II) au mélange obtenu selon l'étape II),
**caractérisé en ce que**
des bulles de mousse formées pendant l'étape III) sont mises au moins temporairement en contact avec un deuxième solvant, la mise en contact des bulles de mousse avec le deuxième solvant ayant lieu par aspersion à partir d'une ou de plusieurs buses de pulvérisation.

2. Procédé selon la revendication 1, **caractérisé en ce que** les prépolymères à fonctionnalité isocyanate A) peuvent être obtenus à partir de la réaction
A1) de polyisocyanates organiques avec
A2) des polyols monomères et/ou des polyols polymères présentant des masses moléculaires moyennes en nombre allant de ≥ 400 g/mole à ≤ 8000 g/mole et des fonctionnalités OH allant de ≥ 1,5 à ≤ 6.

3. Procédé selon la revendication 1 ou 2, **caractérisé en ce que**, dans l'étape II), des composés réactifs vis-à-vis d'isocyanate A3) présentant des masses moléculaires de 62 à 399 g/mole sont ajoutés.

4. Procédé selon l'une des revendications 1 à 3, **caractérisé en ce que**, dans l'étape II), des agents d'hydrophilisation A4) réactifs vis-à-vis d'isocyanate, cationiques, potentiellement cationiques, anioniques ou potentiellement anioniques et/ou non ioniques sont ajoutés.

5. Procédé selon l'une des revendications 1 à 4, **caractérisé en ce que** le procédé est mis en œuvre de telle sorte que la dispersion de polyuréthane obtenue contient des antimousses en une proportion ≤ 1% en poids, par rapport au poids du polyuréthane.

6. Procédé selon l'une des revendications 1 à 5, **caractérisé en ce que** le deuxième solvant est identique au premier solvant.

7. Procédé selon l'une des revendications 1 à 6, **caractérisé en ce que** le premier et le deuxième solvant sont l'acétone.

8. Procédé selon la revendication 7, **caractérisé en ce que** ladite une ou lesdites plusieurs buses de pulvérisation sont agencées dans l'espace à vapeur dans un récipient utilisé pour la distillation.

9. Procédé selon l'une des revendications 1 à 8, **caractérisé en ce que** lors de l'élimination par distillation dans l'étape III), les vapeurs obtenues sont soutirées par l'intermédiaire d'au moins un tube à vapeur et la mise en contact des bulles de mousse avec le deuxième solvant a lieu dans le tube à valeur et/ou à une distance ≤ 1 m du tube à vapeur.

10. Procédé selon l'une des revendications 1 à 9, **caractérisé en ce que** le deuxième solvant est appliqué sur les bulles de mousse pendant l'étape III) à un taux allant de ≥ 0,1 % en volume/h à ≤ 20 (de préférence ≤ 5) % en volume/h, par rapport au volume de la dispersion présente pendant l'étape III).

11. Procédé selon l'une des revendications 1 à 10, **caractérisé en ce que** la mise en contact des bulles de mousse avec le deuxième solvant est mise en œuvre exclusivement dans une plage de pression allant de ≥ 80 mPa à ≤ 500 mPa.

12. Procédé selon l'une des revendications 1 à 11, **caractérisé en ce que** la quantité du deuxième solvant appliqué au cours de l'étape III) est variable dans le temps.
